# EUROPÄISCHE PATENTANMELDUNG

(11) **EP 3 242 015 A1**
(43) Veröffentlichungstag der Anmeldung: **08.11.2017**
(21) Anmeldenummer: 16001023.7
(22) Anmeldetag: 04.05.2016
(51) Int. Cl.: F03G 7/10

(54) **GRAVITATIONSKRAFTMOTOR**

(71) Anmelder: Preglau, Otto, 9062 Moosburg (AT)
(72) Erfinder: Preglau, Otto, 9062 Moosburg (AT)

(57) **Zusammenfassung**

Bei der Absenkung der Balken-Stangen-Konstruktion mittels der Schwerkraft F_{G} werden natürlich die beiden Spindeln (15 und 16) infolge des Wirkkontaktes mittels der translatorisch geführten Gewindemuttern (13 und 14) im Uhrzeigersinn gedreht und infolge der Wirkverbindung mit den beiden Spiralfedern (17) der Uhrfedern (14) eine Einleitung eines Drehmomentes M im Uhrzeigersinn an den Spiralfedern (17) erreicht.

Da der Boden des Gehäuses der unteren Uhrfeder (14) an der translatorisch geführten vertikalen Scheibe (*ϕ* = 0), so wie der Boden des Gehäuses (18) der zweiten unteren Uhrfeder (14) drehfest an dem peripheren translatorisch geführtem Stirnzahnrad (6) (*ϕ* = 0) sitzt, wie die Fig 3 zeigt, an beiden unteren Uhrfedern (14) zu einem gemeinsamen Trieb gegen den Uhrzeigersinn, also eine Drehumkehr sowohl an dem peripheren Stirnzahnrad (6) mit dem Drehwinkel *ϕ* = 0,als auch an der vertikalen Scheibe (26) mit dem Drehwinkel *ϕ* = 0, was zu einer Beschleunigung des Gesamtsystems führt, wobei die Rotationsenergie des Abtriebsrades (3) an eine Arbeitsmaschine weitergeleitet werden kann, was ein gebautes Modell auch beweist.

## Beschreibung

Bei seinen Forschungsarbeiten hat der Physiker Nicolas Leonard Sadi Carnot als Erster den Wirkungsgrad von Dampfmaschinen entdeckt und der Arzt und Physiker Robert Julius Mayer 1842 bei seinen Arbeiten in der Thermodynamik den Energieerhaltungssatz formuliert.

Jede thermodynamische Maschine liefert auch die empirische Erfahrung, dass der Lehrsatz von der Erhaltung der Energie bei den mit Wärme betriebenen Geräten absolut stimmt.

Es wurde aber bis heute weder in der Mechanik noch in der Getriebelehre der Beweis erbracht, dass der 1. Hauptsatz der Thermodynamik für alle auch in Zukunft gebauten Arbeits- und Antriebsmaschinen, sowie Getriebe gilt.

Maschinen, die Arbeit verrichten, unter anderem Verdichter, Pumpen, Dynamomaschinen, werden von Kraftmaschinen (Turbinen, Explosions- oder Elektromotoren usw.) angetrieben. Allgemein bekannt sind die seit der Renaissance gebauten Arbeitsmaschinen bzw. Getriebe, die der Kupplung und Umwandlung von Bewegung und der Energieübertragung dienen, wobei eine Drehbewegung von einer Welle auf eine andere, unter Umwandlung des Drehmoments, übertragen wird.

Da die Arbeitsmaschinen allesamt aus einem ortsfesten Teil, dem Stator (Drehwinkel ϕ = 0) und dem drehenden Teil, dem Rotor, der mit dem Antriebsrad wirkverbunden ist, bestehen, treten bei der Arbeitsverrichtung der Maschinen am Antriebsrad entsprechende Kräfte auf, die der Drehrichtung entgegen wirken und somit unter Energieaufwand überwunden werden müssen.

Deshalb ist es Ziel der Erfindung bessere Wirkungsgrade bei der Umwandlung von mechanischer Arbeit in elektrischen Strom oder in Druckenergie zu erreichen.

Auch kann z.B. bei einem Planetengetriebe usw. durch Einleitung eines reinen Drehmoments (zwei gleich große antiparallele Kräfte) an einem in einer Kreisbahn translatorisch geführten physikalischen Körper (Drehwinkel ϕ_{absotut} = 0) an der Peripherie eines Rades gelagert, dem translatorisch geführten Körper niemals Energie zugeführt werden. (M × ϕ = 0)

Diese allgemeine Aussage der Physik, in Lehrbüchern niedergeschrieben, sind zwar richtig, gelten aber nur für einen Teil der physikalischen Körper, die eine Translationsbewegung in einer Kreisbahn erreichen, wie der unten beschriebene Getriebeaufbau mit zwei translatorisch geführten Antriebsteilen, nämlich zweier elektronisch gesteuerter elektromagnetischer Kupplungen, normalen Elektromotoren bzw. Schrittmotoren.

Heutzutage wird die Gravitationskraft mittels Wasser genutzt iⁿ dem Pelton- und Kaplanturbinen angetrieben werden, die mit Hilfe von Generatoren elektrischen Strom erzeugen.

Mit der Erfindung soll eine Vorrichtung auch mit Hilfe der Schwerkraft eine Beschleunigung erfahren und zwar durch eine Spindel mit sehr steilem Gewinde und einer sehr schweren Spindelmutter, als Hebel ausgebildet, wobei die Gravitationskraft F_{G} zur Einleitung der Rotation und zur Arbeitsverrichtung als Gravitationskraftmotor eingesetzt wird.

An einer ortsfesten Platte ist die vertikale Zentralachse fixiert, die an einer vorbestimmten Stelle eine 90°ige horizontale Abknickung zeigt, an der eine Scheibe drehfest sitzt und sich dann wiederum nach oben forterstreckt und an ihrem Ende festgemacht ist.

Die Zentralachse trägt das Abtriebsrad, das gelagert und antriebsverbunden sich mit einem Schwungrad präsentiert.

Auch ein Stirnzahnrad ist an der Zentralachse drehfest montiert, das über ein Zwischenzahnrad mit einem weiteren, im Schwungrad gelagerten gleich großen Stirnzahnrad infolge Zahneingriffs verbunden ist, wodurch das periphere Zahnrad bei einer Drehung des Schwungrades eine Translationsbewegung ϕ = 0 zeigt.

Der Antriebsteil des neuartigen Getriebes aber umkreist translatorisch geführt (ϕ = 0) mittels einer Stangen-Balken-Konstruktion die bereits oben genannten Zentralachse, wobei die oben beschriebene schwere Konstruktion in zwei vertikalen Stehern auf Schienen gelagert, auf- und abfahren kann und auch zwei Gewindemuttern drehfest trägt, wodurch beide Spindel infolge der wirkenden Gravitationskraft F_{G} in eine Drehung versetzt werden, die aber infolge der vorgesehenen entgegenwirkenden Spiralfedern, sich im Getriebe ein Gleichgewicht einpendelt.

Die genannten Spiralfedern sin in den Uhrfedern, bei denen jeweils das innere Ende der Spiralfedern an den zentralen Zapfen und das äußere Ende der Spiralfeder an der Innenseite der Gehäuseränder angebracht.

Weitergeleitet werden die beiden im Uhrzeigersinn drehenden Drehmomente M jeweils mittels Wellen, die am Boden der Uhrfedern befestigt sind und durch die Wirkverbindung mit den beiden Zapfen der beiden unteren Spiralfedern in Antriebsverbindung stehen, wobei der eine Uhrfederboden an der oben genannten translatorisch geführten vertikalen Scheibe und der Zweite der Uhrfederböden am translatorisch gefühten Stirnzahnrad drehfest sitzt, was am Arbeitsteil, am Abtriebsrad, zu eïner Drehumkehr mit Rotation des Gravitationskraftmotors gegen den Uhrzeigersinn führt, was an eine Arbeitsmaschine zur Arbeitsverrichtung weitergeleitet werden kann.

Eine mögliche Ausführungsform der Vorrichtungstechnischen Erfindung eines Gravitationskraftmotors soll nachstehend anhand der beigefügten Zeichnungen nun erläutert werden.
Fig. 1 zeigt den Aufbau des Gravitationskraftmotors von der Seite mit der vertikalen ortsfesten Zentralachse (1), die mit einem Winkel von 90° an einer vorbestmmten Stelle abgeknickt ist, sowie die ebenfalls abgeknickte translatorisch geführte Welle (ϕ = 0) (16), die Zentralachse (1) im Kreis umfährt.
Fig. 2 soll die Stangen-Balken-Konstruktion von oben darstellen, die für die translatorische Umkreisung (ϕ = 0) des gesamten Getriebes um die Zentralachse (1) verantwortlich ist, von oben zeigen und

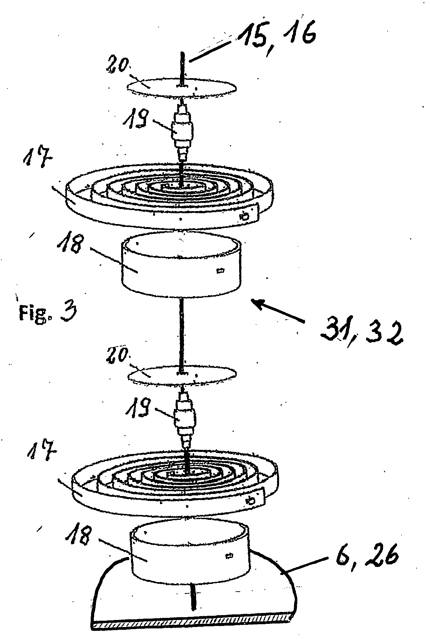

Fig. 3 die Uhrfedern von der Seite betrachtet werden, wobei die unteren Uhrfedern für die Rötation des Gravitationskraftmotors zuständig sind.

Mit der vorgelegten Beschreibung und den beigefügten Zeichnungen soll nun der Gravitationskraftmotor ausführlich beschrieben und vorgestellt werden, wobei dieser theoretisch aus zwei Teilen, nämlich dem Antriebsteil und dem Arbeitsteil besteht.

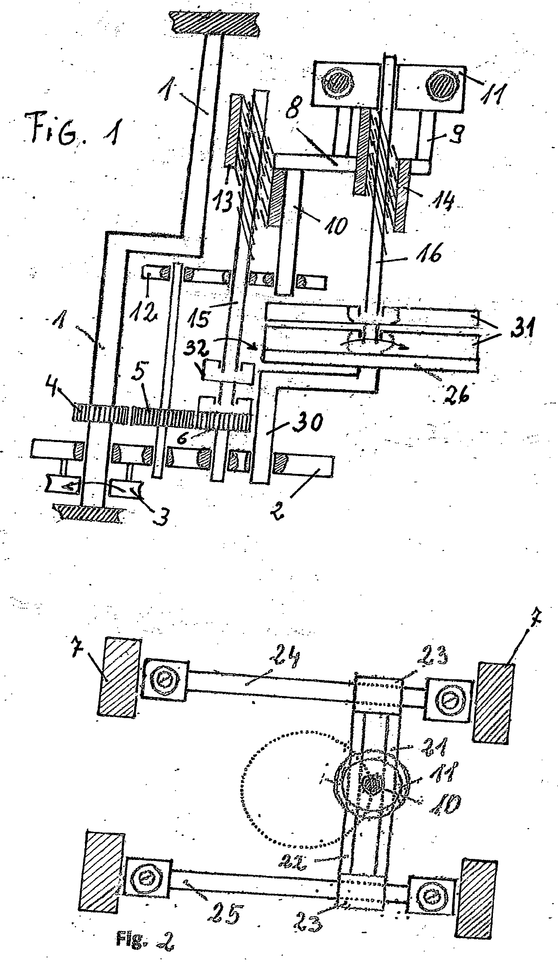

Wie schon beschrieben und in Fig. 1 von der Seite dargestellt, steht die vertikale und abgeknickte Zentralachse (1) ortsfest in ihrer Halterung, wobei ein Schwungrad (2) mit dem Abtriebsrad (3) an ihr lagert.

Zusätzlich trägt die Zentralachse (1) aber noch ein drehfestes Stirnzahnrad (4), das über ein Zwischenzahnrad (5) mit dem gleich großen Stirnzahnrad (6) antriebsverbunden ist und die beiden Stirnzahnräder (5 und 6) im Schwungrad (2) lagern und das letztgenannte Stirnzahnrad (6) eine Translationsbewegung ϕ = 0 erreicht.

Die beiden letztgenannten Stirnzahnräder (5 und 6) lagern so wie die vertikale Welle (30), ebenfalls mit einem horizontalen 90°igen Knick und translatorischer Führung ( ϕ = 0) im Schwungrad (2).

Infolge der Drehung der beiden Spindeln (15 und 16), durch die beaufschlagte Gewichts kraft der Antriebseinheit werden die beiden Spiralfedern (17) der oberen Uhrfedern im Uhrzeigersinn aufgezogen und angespannt.

Zumal aber die Böden der ersten beiden Gehäuse (18) jeweils eine Welle (31) tragen, die jeweils mit dem Zapfen (19) der unteren Uhrfedern (17) verbunden sind, und der Eine der Böden (18) der unteren Uhrfeder (17) an der translatorisch geführten Scheibe (26) und der Zweite der beiden Böden (18) am translatorisch gefühten Stirnzahnrad (6), kommt es zu einer Drehumkehr des Systems mit Rotation desselbengegen den Uhrzeigersinn, sowohl des Schwungrades, als auch des Abtriebsrades (3), das mit einer Arbeitsmaschine wirkverbunden, Rotationsenergie an diese liefert.

Abschließend soll noch angemerkt werden, dass die Antriebseinheit aus der Balken-Stangen-Konstruktion besteht, die in Fig. 2 dargestellt und von oben gesehen, aus zwei Balken (24 und 25), die auf vier Stehern (7) auf Schienen gelagert, vertikal auf- und abfahren kann, wobei die zwei Balken gleitmögliche Schlitten (23) tragen, an denen die zwei Stangen (21 und 22) festsitzen. Zwischen den oben genannten Stangen (21 und 22) lagert die periphere Spindel (16) aber auch die gesamten notwendigen Verst rebun gen (8,9,10 und 12) sowie die beiden an den Verstrebungen sitzenden Gewindemuttern (13 und 14) und erreichen eine kreisende TRanslationsbewegung ϕ = 0 um die Zentralachse (1).

Da die beiden Spindeln (15 und 16), die natürlich auch eine Translationsbewegung ϕ = 0 zeigen und mit den Gewindemuttern (13 und 14) wirkverbunden sind, wird der gesamte Antriebsteil mittels der wirkenden Gravitationskraft F_{G} nach unten gedrückt, mit einer Drehung der Spindel (15 und 16) und somit auch eine Anspannung der beiden Spiralfedern (17) beiderseits erreicht und zwar soweit bis sich ein Gleichgewicht zwischen der wirkenden Gravitationskraft F_{G} nach unten und der Anspannung der Spiralfedern (17) in den Uhrgehäusen einstellt.

## Patentansprüche

1. Gravitationskraftmotor zur Umwandlung der Gravitationskraft F_{G} in Rotationsenergie mit Weiterleitung derselben an Arbeitsmaschinen, **dadurch gekennzeichnet, dass**
der Antriebsteil aus zwei Balken (24 und 25) besteht, die an vier Stehern (7) lagern und an Schienen vertikal auf- und abgleiten können und je einen Schlitten(23) tragen, wobei an denen zwei Stangen (21 und 22) festsitzen und somit diese vertikal hin- und hergleiten, wodurch die zwischen der beiden Stangen (21 und 22) befindliche; Spindel. (16) im Kreis geführt und die Stangen-Balken-Konstruktion an den beiden Spindeln (15 und 16) auch auf- und abfahren.

2. Gravitationskraftmotor nach Anspruch 1 **dadurch gekennzeichnet, dass** der Antriebsteil, also die oben beschriebene Balken-Stangen-Konstruktion nicht nur die Möglichkeit hat, auf- und abzufahren, sondern auch mittels Verstrebungen (8, 9, 10, und 12) die beiden Gewindemuttern zu tragen.

3. Gravitationskraftmotor nach den Ansprüchen 1 und 2 **dadurch gekennzeichnet, dass**
die schwere Balken-Stangen-Konstruktion infolge der wirkenden Gravitationskraft F_{G} nach unten gedrückt wird, wodurch die beiden Spindeln (15 und 16) eine Drehung erfahren und somit die beiden Spiralfedern (17) der beiden Uhrfedern (14) so weit anspannt, bis der Gravitationsmotor mit den angespannten Spiralfedern (17) im Gleichgewicht steht.

4. Gravitationskraftmotor nach einem der Ansprüche 1 bis 3 **dadurch gekennzeichnet, dass**
sich durch Anspannung der beiden Spiralfedern (17) zu einem gemeinsamen Trieb gegen den Uhrzeigersinn, sowohl an dem peripheren Stirnzahnrad (6), als auch an der vertikalen Scheibe (26) mit dem Drehwinkel ϕ = 0, was zu einer Beschleunigung des Gesamtsystems führt, wobei die Rotationsenergie des Abtriebsrades (3) an eine Arbeitsmaschine weitergeleitet werden kann, was ein gebautes Modell auch beweist.
